# EUROPEAN PATENT APPLICATION

(11) **EP 1 094 281 A2**
(43) Date of publication of application: **25.04.2001**
(21) Application number: 00121306.5
(22) Date of filing: 06.10.2000
(51) Int. Cl.: F24F 13/28

(54) **Profile for perimetric supporting frames**

(30) Priority: 21.10.1999 IT PD990111 U
(71) Applicant: VEFIM S.r.l., 37136 Verona (IT)
(72) Inventor: Abrescia, Gianfilippo, 37124 Verona (IT)
(74) Representative: Modiano, Guido, Dr.-Ing.

(57) **Abstract**

A profile for perimetric supporting frames with a structure made of plastics, comprising two mutually perpendicular wings (19,20), one of which is divided longitudinally into two portions (22,23) which can be articulated. The portions have complementary elements (26,27) for mutual engagement when they are arranged at right angles to each other so as to give a C-shaped contour to the profile as a whole.

## Description

The present invention relates to a profile for perimetric supporting frames.

The profile is particularly but not exclusively suitable for manufacturing frames for air filters for air conditioning, extraction and air treatment systems in general.

Currently air filter frames with C-shaped profiles made of galvanized sheet metal are already known.

Each profile, cut to size, is folded by means of expensive forming machines so as to form a quadrangular member, whose closure elements are fixed one another by means of a screw or rivet.

This constructive structure and method makes it difficult to insert in the frame the filtering fabric, which is arranged between two metal meshes constituting a structural support thereof.

It is in fact necessary to insert the filtering pack, formed by the fabric and the meshes, during the operation for closing the quadrangular member, making sure that the edges of said pack do not escape from the sheet metal.

This is done with some difficulty and in any case with a great waste of time.

Accordingly, extremely high labor costs for manufacturing companies are entailed for mass-production.

Moreover, for subsequent maintenance or replacement operations the user must perform reverse operations in order to remove the filtering pack to clean it or replace it.

He/she must in fact remove the fixing screw or rivet, open one of the sides of the frame, being careful not to break it in the folding region, remove the filtering pack, and reposition the clean filter, taking care to insert the edges in the C-shaped profile, and then close the open side.

These operations are difficult and time-consuming and therefore uneconomical, to the point that it would be more convenient to replace the dirty filter, including the frame, rather than replace the filtering pack alone.

Currently, therefore, the replacement of the metal frame, which usually remains in good condition for a long time and can be reused several times until its elements break, is a high cost factor for the user.

The aim of the present invention is to provide a profile for perimetric supporting frames having a structure which provides simpler, faster and cheaper manufacture of said frame and insertion and removal of the filtering pack in the frame.

Within the scope of this aim, a consequent primary object is to reduce the labor costs for manufacturing perimetric supporting frames.

Another important object is to make it easy, quick and inexpensive for the user to simply replace the filtering pack during maintenance.

Another object is to provide a profile which allows to manufacture perimetric supporting frames without requiring the intervention of the expensive forming machines that are currently provided.

These and other objects which will become better apparent hereinafter are achieved by a profile for perimetric supporting frames with a structure made of plastics, characterized in that it comprises two mutually perpendicular wings, one of which is divided longitudinally into two portions which can be articulated, said two portions having complementary elements for mutual engagement when they are arranged at right angles to each other so as to give a C-shaped contour to the profile as a whole.

Further characteristics and advantages of the invention will become better apparent from the following detailed description of an embodiment thereof, illustrated only by way of non-limitative example in the accompanying drawings, wherein:
Figure 1 is a partially exploded perspective view of an air filter with perimetric supporting frame produced with the profile according to the invention;
Figure 2 is an enlarged-scale sectional view of a detail of the filter of Figure 1;
Figure 3 is a transverse sectional view of the profile used for the supporting frame of Figure 1;
Figure 4 is a sectional view of a corner region of the frame.

With reference to the above cited figures, an air filter is generally designated by the reference numeral 10 and is constituted by a perimetric supporting frame 11 and by a filtering pack which is constituted by a sheet of filtering fabric 12 arranged between two metallic meshes 13.

According to the invention, the frame 11 is constituted by four elements, designated by the reference numerals 14, 15, 16 and 17 respectively, which are obtained from a profile 18 made of plastics being obtained by extrusion and comprises two mutually perpendicular wings, designated by the reference numerals 19 and 20 respectively. The second wing is divided by a thinner region 21, which forms a flexible hinge, into two portions which can be mutually articulated: the first portion 22 is rigidly coupled to the wing 20 and the second portion 23 is arranged in series to the first one.

The transverse dimension of the second portion 23 of the wing 19 is substantially identical, in this case, to the transverse dimension of the wing 19, so that when it is arranged at right angles to the first portion 22 the profile as a whole becomes C-shaped.

Between the wing 19 and the first portion 22 of the wing 20, an angular longitudinal partition 24 which is monolithic thereto forms a tubular element 25 which in this case has a square cross-section and is designed to strengthen the structure and for the insertion of connecting angular elements explained in detail hereinafter.

A hook-shaped longitudinal element 26 protrudes from the second portion 23 of the wing 20 and is complementary to a similar hook-shaped longitudinal element 27 which protrudes from the partition 24.

The two hook-shaped longitudinal elements 26 and 27 couple to each other after deformation due to the elasticity of the materials when the second portion 23 of the wing 20 is folded onto the second portion 22 toward the wing 19, forming, as mentioned, a C-shaped configuration.

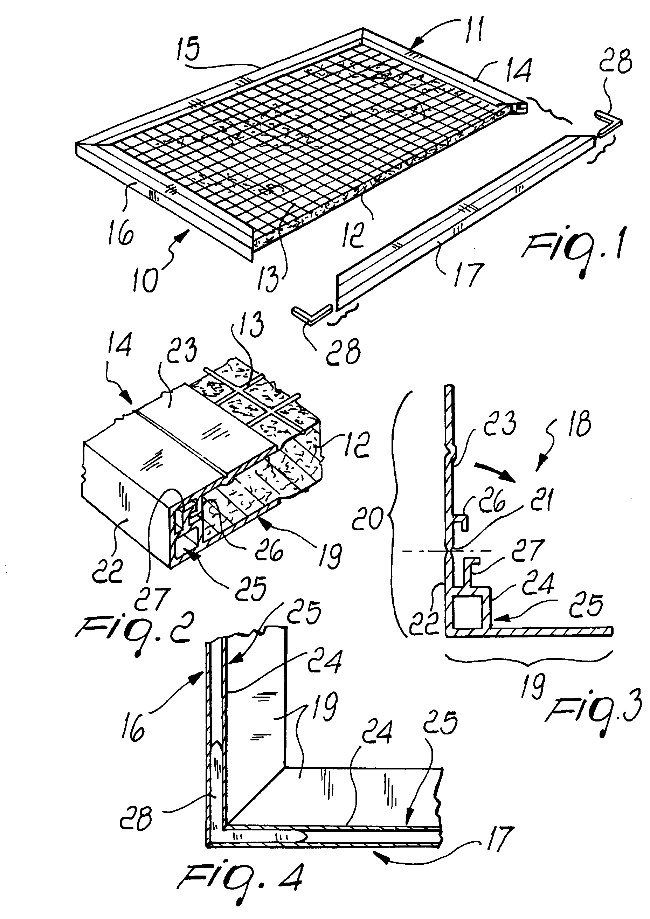

In this last arrangement, the ends of the two hook-shaped elements 26 and 27 are mutually stably coupled because the second one is interposed in front of the first one along the possible return path (see Figure 2).

The frame 11 is completed by angular elements 28 which have a square cross-section and an L-shaped profile and are inserted snugly in the tubular elements 25 after the elements of the frame 14, 15, 16 and 17 with diagonally cut ends have been obtained from the profile 18.

In order to install and remove from the frame 11 the filtering pack constituted by the sheet 12 and by the meshes 13, it is sufficient to raise the second portions 23 of the wings 20, disengaging the elements 26 from the elements 27, and then reposition them in the closed configuration which they maintain stably due to the engagement.

In practice it has been observed that the intended aim and objects of the present invention have been achieved.

The operation for manufacturing the frame, and the insertion or removal of the filtering pack in the frame have in fact been simplified and rendered faster and cheaper.

In this way it is possible to reduce the labor costs both during production and during maintenance for replacement.

It is also noted that it is no longer necessary, as currently occurs, to bend the sides of the frame with forming machines which are rather expensive and troublesome to adjust when they have to be adapted to the various dimensions and thicknesses of the profiles.

In practice, the materials used, so long as they are compatible with the contingent use, as well as the dimensions, may be any according to requirements.

The disclosures in Italian Utility Model Application No. PD99U000111 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A profile for perimetric supporting frames with a structure made of plastics, characterized in that it comprises two mutually perpendicular wings, one of which is divided longitudinally into two portions which can be articulated, said two portions having complementary elements for mutual engagement when they are arranged at right angles to each other so as to give a C-shaped contour to the profile as a whole.

2. The profile according to claim 1, whose structure is characterized in that said two portions that can be mutually articulated are joined by a thinner region which forms a flexible hinge.

3. The profile according to one or more of the preceding claims, characterized in that the transverse dimension of the portion of said two portions that is spaced from the other wing is substantially identical to the transverse dimension of said wing.

4. The profile according to one or more of the preceding claims, characterized in that in the region between said wings there is an angular longitudinal partition which is monolithic therewith and forms a tubular element which has a quadrangular cross-section.

5. The profile according to one or more of the preceding claims, characterized in that on said second wing portion a hook-shaped longitudinal element protrudes and is complementary with respect to a similar hook-shaped longitudinal element which protrudes from said angular partition, said hook-shaped longitudinal elements coupling to each other after deformation produced by the elasticity of the materials when the second portion of the corresponding wing is folded onto the first portion, forming a C-shaped configuration, the tips of said two hook-shaped elements being, in this configuration, rigidly coupled to each other stably because the second one is interposed in front of the first one in the possible return path.

6. The profile according to one or more of the preceding claims, characterized in that said tubular element having a quadrangular cross-section formed between said perpendicular wings by said angular longitudinal partition is a seat for the snug insertion of angular elements having complementarily shaped cross-sections and an L-shaped contour which are suitable to associate two consecutive profile elements that constitute a frame.
